# FASCICULE DE BREVET EUROPEEN

(11) **EP 3 016 891 B1**
(45) Date de publication et mention de la délivrance du brevet: **05.04.2017**
(21) Numéro de dépôt: 14745200.7
(22) Date de dépôt: 01.07.2014
(51) Int. Cl.: B65G 17/12, A21B 1/42, B65G 47/57

(54) **DISPOSITIF DE TRANSPORT DE TYPE NORIA**
TRANSPORTVORRICHTUNG VOM NORIA-TYP
TRANSPORT DEVICE OF THE NORIA TYPE

(30) Priorité: 05.07.2013 FR 1356601
(43) Date de publication de la demande: 11.05.2016
(73) Titulaire: MECATHERM, Société Anonyme, 67130 Barembach (FR)
(72) Inventeur: ZORN, Bernard, F-67700 Saverne (FR)
(74) Mandataire: Rhein, Alain
(86) Numéro de dépôt international: PCT/FR2014/051693
(87) Numéro de publication internationale: WO 2015/001254

(56) Documents cités:
- EP-A1- 0 710 441
- GB-A- 2 129 451
- US-A- 3 317 029
- US-A- 5 255 773

## Description

La présente invention entre dans le domaine du transport et du convoyage de produits, en particulier de produits de boulangerie, viennoiserie et analogue.

Un tel dispositif trouvera une application particulière, mais aucunement limitative, dans le transport de produits sous forme de pâtons au travers de différentes lignes en vue de leur traitement, en particulier pour leur cuisson.

De préférence, ce convoyage de pâtons s'opère au sein de fours de cuisson, en particulier de fours à cuisson continue.

De façon connue, de tels fours comportent une enceinte de
cuisson munie d'une ouverture d'entrée et d'une ouverture de sortie, traversée par un dispositif de transport, permettant de véhiculer des supports de cuisson du type plaques, filets ou analogue sur lesquels reposent les produits à cuire.

Plus précisément, l'invention vise un dispositif de transport de type noria assurant une circulation ascendante et descendante des produits au sein de l'enceinte de cuisson. Une telle noria comporte au moins une chaîne d'entraînement à maillons, de préférence un couple de chaînes. Chacune vient s'enrouler au moins autour de deux roues de renvoi, pour décrire un circuit bouclé. Un tel circuit comporte alors au moins un brin de chaîne ascendant et un second brin de chaîne descendant, tous les deux verticaux.

Par ailleurs, sur chaque chaîne sont rendus solidaires en fixation des bras supports, s'étendant perpendiculairement, sur lesquels viennent reposer les plaques de produits à cuire. Dès lors, le four comporte une colonne de plaques montantes et une colonne de plaques descendantes.

On notera qu'au niveau de l'extrémité supérieure de la noria, une plaque supportée par une paire de bras se situant sur la colonne montante est transférée vers une paire de bras de la colonne descendante, par l'intermédiaire de moyens de transfert appropriés. Au niveau de l'extrémité inférieure, les plaques circulent sur un convoyeur horizontal adapté et sont prélevées en amont par la colonne montante et déposée en aval par la colonne descendante.

Un exemple d'un tel dispositif de transport de type noria est décrit dans le document EP 0 710 441.

Une telle conception d'un dispositif de transport de type noria, sur lequel sont fixés perpendiculairement des bras supports, entraîne des nombreuses contraintes mécaniques essentiellement en raison du poids appliqués sur les bras par les plaques chargées de produits, ledit poids étant déporté extérieurement par rapport à l'axe médian vertical passant par l'axe desdites roues de renvoi. Ce porte-à-faux tend à faire ployer les bras vers le bas au niveau des brins ascendant et descendant de la chaîne. Plus précisément, ce poids déporté repousse chaque maillon intérieurement au niveau de son axe inférieur et extérieurement au niveau de son axe supérieur, déformant la linéarité verticale de la chaîne. Pour contrer cette déformation, il est alors nécessaire d'augmenter considérablement la tension appliquée par les roues de renvoi et de la contrôler régulièrement. Cette tension plus élevée nécessite un entraînement et une motorisation plus importantes et provoque aussi une usure plus rapide des différentes pièces, que ce soit les maillons de la chaîne ou bien les roues de renvoi.

De plus, il est nécessaire d'assurer constamment la lubrification des différentes pièces, augmentant le coût d'entretien d'un tel dispositif.

Par ailleurs, outre conserver les bras selon une direction perpendiculaire, parfaitement alignés horizontalement de part et d'autre aux niveaux des brins ascendants et descendants, il est nécessaire d'assurer que les bras restent dans le plan vertical de leur chaîne respective. Pour éviter ces torsions des maillons, les dispositifs actuels sont équipés de moyens de guidage, souvent doublés, sous formes de roues de centrage. Si de tels moyens de guidage empêchent la chaîne de vriller, ils génèrent des frottements augmentant l'usure des maillons et nécessitent encore une fois d'augmenter la tension appliquée sur la chaîne.

D'autres éléments de guidage sont ajoutés, pour assurer la linéarité verticale de chaque brin. Ces éléments se présentent sous la forme de rails ou de galets qui entraînent les mêmes inconvénients et nécessitent encore une fois une lubrification régulière.

Le document GB 2 129 451 décrit un exemple de dispositif de type noria, comprenant une embase rapportée sur chaque maillon et venant en appui sur l'embase située juste en-dessous, selon le préambule de la revendication 1. Toutefois, l'embase est positionnée à l'avant de chaque maillon et l'appui s'effectue au devant de la chaîne, entraînant des contraintes mécaniques de porte-à-faux.

Le document US 5 255 733 décrit une chaîne particulière dont la moitié des maillons présente une forme spécifique. Toutefois, une telle chaîne ne procure aucun appui de ses maillons entre eux.

Le document US 3 317 029 vise une chaîne pourvue d'embases positionnées latéralement, mais avec une forme en S, dont le coude vient appuyer en biais sur le chant supérieur de l'embase située en dessous. Cette solution présente un axe de jonction de deux maillons, qui vient effectuer le blocage des embases, sans conférer d'appui du fait que les embases ne reposent pas les unes sur les autres.

La présente invention a pour but de pallier les inconvénients de l'état de la technique, en proposant tout d'abord de rigidifier la chaîne au niveau de ses brins ascendant et descendant, de sorte que le poids déporté des plaques supportées par les bras ne s'applique plus directement sur chaque maillon de la chaîne, mais selon une unique composante verticale descendante.

Par ailleurs, l'invention se propose de s'affranchir des différents moyens et éléments de guidage, en transposant les effets de ces guidages directement à chaque maillon de la chaîne, en particulier au niveau de ses brins ascendant et descendant.

Ainsi, un tel dispositif de transport, de type noria, comporte au moins une chaîne d'entraînement à maillons venant s'enrouler au moins autour de deux roues de renvoi pour décrire un circuit bouclé comportant au moins un premier brin de chaîne ascendant et un second brin de chaîne descendant verticaux, au moins un maillon de ladite chaîne recevant un bras support s'étendant suivant une direction à la fois perpendiculaire à la chaîne et aux axes des maillons de la chaîne. Il se caractérise par le fait qu'un bras support est rapporté latéralement sur un maillon au moyen d'au moins une embase, une embase comportant au moins une surface d'appui à chacune de ses extrémités dans le sens de défilement de ladite chaîne, au moins au travers d'une de ces surfaces d'appui ladite embase repose sur une autre embase contiguë d'un autre bras support rapporté sur un autre maillon de la chaîne, au niveau des brins ascendant et descendant de ladite chaîne, et par le fait que chaque embase comporte encore à chacune de ses extrémités une surface d'alignement de son bras dans un plan selon ladite direction, chaque surface d'alignement venant coopérer avec une autre surface d'alignement d'une embase suivante ou précédente, au moins au niveau des brins ascendant et descendant, chaque surface d'alignement s'étendant verticalement, ménagée au moins en partie dans l'épaisseur de ladite embase, la surface d'alignement étant ménagée par un décroché réalisé dans l'épaisseur du corps de l'embase, au niveau de chacun de ses chants supérieur et inférieur.

Plus précisément, chaque surface d'appui peut s'étendre horizontalement vers la direction opposée audit maillon, au moins sur une partie du chant de son extrémité.

Dès lors, au niveau des brins verticaux, chaque embase vient s'appuyer sur l'embase qui se situe en dessous, sans appliquer de force de pivotement au niveau de l'axe du maillon sur laquelle elle est assujettie. Les embases viennent alors se superposer au niveau de la montée et de la descente de chaîne.

Avantageusement, chaque embase peut comporter au moins à une extrémité située dans le sens de défilement de la chaîne, un chanfrein assurant l'introduction de ladite embase au sein de l'une des surfaces d'appui et/ou d'alignement d'une autre embase contiguë.

Ainsi, après le passage autour des roues de renvoi, les embases sont réalignées, en vue d'opérer l'appui vertical susmentionné. Les brins de chaîne se retrouvent alors parfaitement verticaux, sans risque de torsion, les bras se retrouvant parfaitement dans le plan d'alignement de leur chaîne respective.

Par ailleurs, selon encore d'autres caractéristiques subsidiaires, partant de la position d'alignement de deux maillons, ledit dispositif peut comprendre des moyens de blocage du pivotement desdits deux maillons contigus, dans la direction opposée au sens d'enroulement de ladite chaîne.

Selon un premier mode de réalisation, que lesdits moyens de blocage peuvent comprendre au moins une butée solidaire de chaque maillon contre laquelle vient bloquer au moins une surface d'arrêt dont est pourvue intérieurement une embase.

Selon un autre mode de réalisation, lesdits moyens de blocage peuvent comprendre une unique butée solidaire de chaque maillon, sous forme d'un plot saillant latéralement, contre lequel vient bloquer les surfaces d'arrêt dont sont pourvues intérieurement deux embases contiguës.

Selon encore un autre mode de réalisation, lesdits moyens de blocage peuvent être constitués par une surface d'arrêt dont est pourvue chaque extrémité d'une embase, ladite surface d'arrêt coopérant avec une autre surface d'arrêt d'une autre embase contiguë.

Selon encore un mode différent de réalisation, lesdits moyens de blocage peuvent être constitués par un chant d'arrêt dont est pourvu extérieurement chaque embase sur une partie de sa hauteur, ledit chant d'arrêt venant en appui contre la face extérieure du maillon solidaire de ladite embase.

Ce blocage par différents types de butées assure que les bras resteront parfaitement horizontaux, bien droit, sans risque de faire pivoter le maillon sur lequel ils sont assujettis.

D'autres caractéristiques et avantages de l'invention ressortiront de la description détaillée qui va suivre des modes de réalisation non limitatifs de l'invention, en référence aux figures annexées, dans lesquelles :
- la figure 1 représente une vue schématisée selon une coupe verticale d'un exemple de four de cuisson continu, à déplacement vertical, équipé d'un dispositif de transport de type noria selon l'invention ;
- la figure 2 représente une vue schématisée, en perspective de trois quart arrière, d'un détail d'un premier mode de réalisation d'un tel dispositif, montrant deux embases contiguës en appui l'une sur l'autre au niveau d'un des brins verticaux, ascendant ou descendant de la chaîne ;
- la figure 3 représente une vue schématisée d'une chaîne du dispositif lors de son passage autour de la roue de renvoi supérieure, montrant l'écartement des embases avant leur réalignement et leur retour en appui au niveau du brin descendant ;
- la figure 4 représente une vue schématisée, en perspective de trois quart avant, d'un détail du mode de réalisation de la figure 3, montrant deux embases contiguës en appui l'une sur l'autre ;
- la figure 5 représente une vue schématisée, selon une coupe longitudinale verticale d'un détail de la figure 4, montrant l'appui de deux embases contiguës ;
- la figure 6 représente une vue schématisée, en perspective de trois quart arrière, montrant un autre mode de réalisation de surface d'arrêt de deux embases contiguës en appui l'une sur l'autre ;
- la figure 7 représente une vue schématisée similaire à la figure 4, d'un autre mode de réalisation des moyens de blocage constitués par le chant d'arrêt d'une embase ; et
- la figure 8 représente une vue schématisée, selon une coupe transversale de la figure 7.

La présente invention concerne un dispositif 1 de transport de produits de boulangerie, viennoiserie ou analogue.

De façon essentielle, un tel dispositif 1 est de type noria. En outre, de façon non limitative, il comporte au moins une chaîne 2 d'entraînement à maillons 3, mais peut en comporter plusieurs.

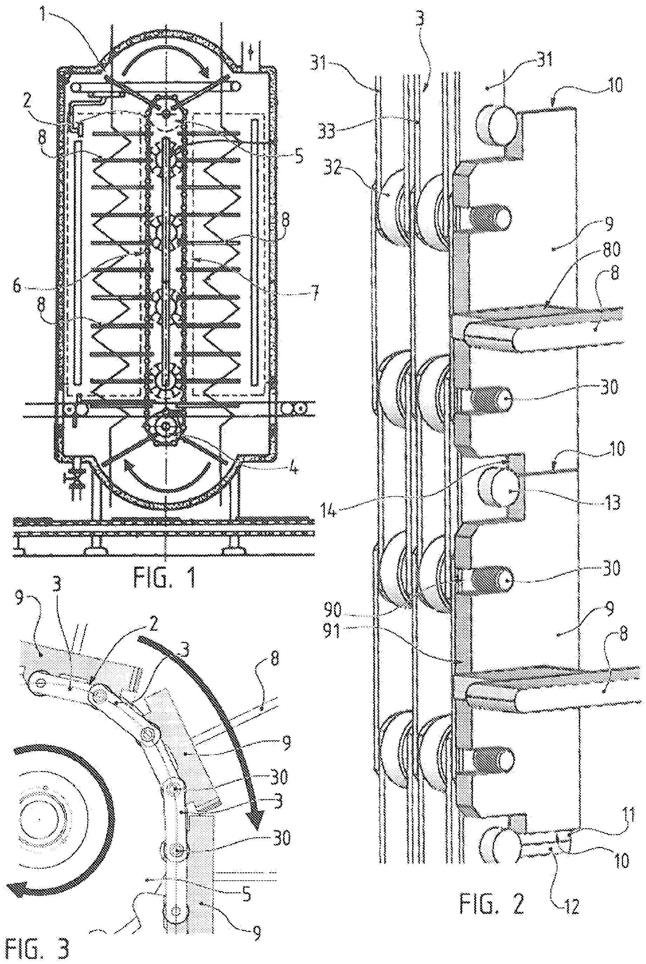

A ce titre, de façon préférentielle, chaque maillon 3 est monté articulé avec deux maillons adjacents, un précédent et un suivant par rapport au sens de déplacement de ladite chaîne 2. Cette articulation s'effectue au travers d'au moins un axe de rotation 30 traversant les platines 31 constituant chaque maillon 3. Ledit axe 30 peut aussi coopérer au sein des douilles constituant l'entretoisement desdits maillons 3. Une telle articulation assure le pivotement libre des maillons 3 les uns par rapport aux autres, comme spécifiquement visible sur la figure 3.

Selon le mode préférentiel de réalisation, chaque maillon 3 peut aussi comprendre des moyens de roulement, sous la forme de rondelles ou galets, de forme globalement cylindriques 32, montées libres en rotation autour de chaque axe 30. Comme visible sur la figure 2, une paire de rondelles ou galets 32 est montée libre en rotation sur chaque axe 30, lesdites rondelles 32 étant coaxiales et séparées par au moins une platine centrale 33. Ces galets 32 assurent notamment le roulement le long d'un guide vertical.

Par ailleurs, la chaîne 2 vient s'enrouler autour d'au moins deux roues de renvoi, de préférence deux. Selon le mode de réalisation préférentielle représenté sur la figure 1, la chaîne 2 vient s'enrouler autour d'une roue inférieure 4 et d'une roue supérieure 5. On notera qu'au moins la roue supérieure 5 peut alors être la roue motrice, sa motorisation entraînant la chaîne 2 et assurant la mise en circulation dudit dispositif 1.

A ce titre, la chaîne 2 est agencée pour décrire un circuit bouclé comportant au moins un premier brin 6 de chaîne 2 ascendant et un second brin de chaîne descendant 7. Ces deux brins 6,7 correspondent aux portions de chaîne 2 situées entre les roues 4,5 et s'étendant verticalement. Ces brins 6,7 sont donc verticaux. En outre, ledit circuit est dit bouclé en raison de la continuité de sa chaîne 2, formant une boucle, circulant de façon dite « sans fin ».

Selon une autre caractéristique, au moins un maillon 3 de ladite chaîne 2 reçoit un bras support 8. De préférence, un maillon sur deux reçoit un bras support 8, comme visible sur la figure 3. Ainsi, des bras 8 sont disposés à intervalles réguliers tout le long de ladite chaîne 2.

De tels bras 8 s'étendent suivant une direction à la fois perpendiculaire à la chaîne 2 et aux axes 30 des maillons 3 de la chaîne 2. Ainsi, au niveau des brins 6,7 les bras s'étendent horizontalement ou sensiblement horizontalement, comme visible sur la figure 1, mais aussi dans le plan vertical passant par lesdits deux brins 6,7 de la chaîne 2. Aux niveaux des roues 4,5, lesdits bras suivent la course et la rotation desdits maillons 3, pour venir s'étendre radialement par rapport à l'axe de ladite roue 5,4 ou bien orthogonalement à la tangente de la trajectoire prise par ladite chaîne 2 lors de son enroulement autour de l'une des roues 4,5.

En outre, dans le cas de deux chaînes 2, les bras 8 d'une première chaîne sont disposés et leurs déplacements synchronisés, de sorte qu'ils soient parfaitement alignés horizontalement avec les bras de la seconde chaîne, cette dernière décrivant alors un circuit identique, avec des vitesses entraînement égales.

Avantageusement, le dispositif 1 se caractérise par le fait qu'un bras support 8 est rapporté latéralement sur un maillon 3 au moyen d'au moins une embase 9. En particulier, chaque bras 8 peut être soudé au corps d'une unique embase 9 via une pièce intermédiaire 80, déportant ledit bras 8 latéralement et horizontalement. Cette fixation de la pièce intermédiaire 80 s'effectue sur la face opposée à la face venant coopérer d'un côté de son maillon 3.

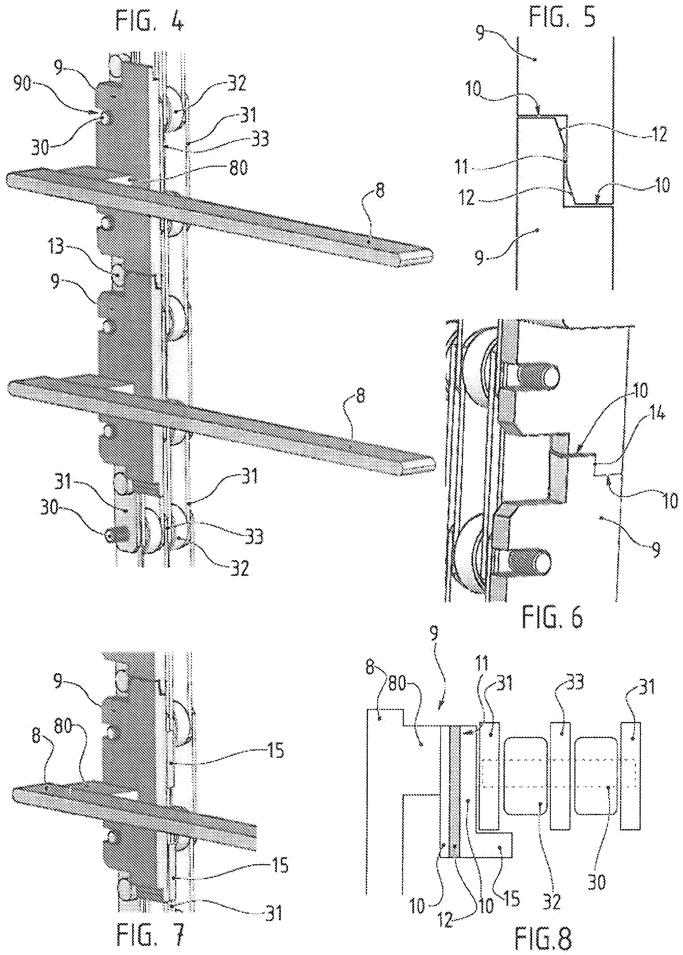

De plus, ladite embase 9 est assujettie à un maillon 3, en particulier au niveau de ses axes 30. Pour ce faire, selon le mode préférentiel de réalisation, au sein du corps de ladite embase 9, au niveau du bord extérieur situé en opposition au sens desdits bras 8, sont ménagés deux orifices 90 traversés par l'extrémité de chacun des axes 30 dudit maillon 3. Chaque orifice 90 peut être prévu oblong, ouvert au niveau du chant 91 dudit bord. Cette configuration est particulièrement visible sur la figure 6, où le chant 91 est situé à l'arrière, du côté de la chaîne 2, tandis que les bras 8 s'étendent de l'autre côté, vers l'extérieur. L'extrémité débouchant desdits axes 30 peut être prévue filetée, de manière à recevoir des écrous assurant le blocage de l'embase 9, alors solidaire de son maillon 3.

Par ailleurs, chaque embase 9 comprend un corps qui peut être constitué d'un unique élément, sous forme d'une plaque, ayant une longueur au moins égale à celle de son maillon 3, mais de préférence approximativement équivalente à la longueur de deux maillons 3. De plus, l'embase 9 peut être centrée, de sorte qu'elle dépasse à chaque extrémité de son maillon 3, venant recouvrir en partie, de préférence au moins à moitié, chacun des maillons adjacents.

Selon une caractéristique essentielle dudit dispositif 1, il est prévu qu'aux niveaux des brins 6,7, lorsque la chaîne 2 est verticale sur ces portions respectives, de rigidifier lesdits brins 6,7 et de limiter l'effet de porte-à-faux appliqué par les bras 8. De plus, l'invention envisage aussi de limiter la tension appliquée par le poids des bras 8, à vide ou chargés. Pour ce faire, les embases 9 sont conçues et conformées pour s'empiler et, ainsi, former une superposition en appui les unes sur les autres. Cet empilement d'embases 9 forme alors une tige verticale, transposant le poids vers l'embase située tout en bas, au niveau de la roue inférieure de renvoi 4. C'est alors au niveau de cette roue 4 qu'est reporté et supporté ce poids conjugué de toutes les embases 9 de chacun des deux brins 6,7. Dès lors, le poids cumulé du brin ascendant 6 vient contrer le poids cumulé du brin descendant 7, situé de l'autre côté.

Ainsi, une embase 9 comporte au moins une surface d'appui 10 à chacune de ses extrémités dans le sens de défilement de ladite chaîne 2. De plus, au moins au travers d'une de ces surfaces d'appui 10, ladite embase 9 repose sur une autre embase contiguë d'un autre bras support rapporté sur un autre maillon de la chaîne 2, uniquement au niveau des brins ascendant 6 et descendant 7 de ladite chaîne 2.

En somme, la coopération des surfaces d'appui 10 de deux embases adjacentes 9 ne s'effectue qu'au moment du circuit où la chaîne 2 se trouve verticale.

Selon le mode préférentiel de réalisation, chaque surface d'appui 10 est prévue plane, horizontalement ou sensiblement horizontalement. Toutefois, une tel surface 10 peut aussi être prévue inclinée, ou bien avec des parties mâle et femelle, voire avec une denture, autorisant la coopération avec réciproquement des parties femelle et mâle, voire la denture correspondante, de l'embase adjacente. Ainsi, par rapport au sens de circulation représenté sur les figures 1 et 3, au niveau du brin ascendant 6, une embase vient reposer sur l'embase précédente, tandis qu'au niveau du brin descendant 7, une embase vient reposer sur l'embase suivante, toujours par appui au niveau de leur surface respectives 10.

De façon subsidiaire, ces surfaces d'appui 10 limitent aussi le porte-à-faux des bras 8. Pour ce faire, chaque surface d'appui 10 peut s'étendre horizontalement vers la direction opposée audit maillon 3, au moins sur une partie du chant de son extrémité. En somme, chaque surface d'appui 10 est située de façon excentrée ou déportée, vers l'extérieur, par rapport au maillon 3 sur lequel est fixée son embase 9. On comprend que ce déport est nécessaire pour contrer le pivotement appliqué au niveau des axes 30, mais aussi de toujours autoriser la rotation des maillons 3, au niveau des roues 4,5, comme visible sur la figure 3 où les surfaces d'appui 10 sont déportées et excentrées sur la droite.

Selon l'invention, le dispositif 1 prévoit d'empêcher la torsion de la chaîne 2 sur elle-même.

Pour ce faire, chaque embase 9 comporte encore à chacune de ses extrémités une surface d'alignement 11 de son bras 8 dans un plan selon ladite direction, à savoir perpendiculairement à la chaîne 2, ou bien horizontalement vers l'extérieur et dans le plan de ladite chaîne 2 et de ses deux brins 6,7.

De plus, chaque surface d'alignement 11 vient coopérer avec une autre surface d'alignement d'une embase suivante ou précédente, au moins au niveau des brins ascendant 6 et descendant 7.

Dès lors, en coopération, les surfaces d'alignement 10 assurent que deux embases 9 se situent dans le même plan, leur deux corps étant parfaitement alignés, à plat.

Selon l'invention, chaque surface d'alignement 11 s'étend verticalement, ménagée au moins en partie dans l'épaisseur de ladite embase 9.

Selon l'invention, et tel que représenté sur les figures 4
et 5, la surface d'alignement 11 est ménagée par un décroché réalisé dans l'épaisseur du corps de l'embase 9, au niveau de chacun de ses chants supérieur et inférieur. Au niveau du chant supérieur, le décroché est tourné vers le maillon 3, tandis qu'il est en opposition au niveau du chant inférieur, tourné vers le bras 8. Deux embases 9 adjacentes viennent coopérer ensembles au niveau de ces évidements ainsi réalisés, notamment par emboîtement suivant la rotation appliquée au niveau des roues de renvoi 4,5.

A ce titre, pour faciliter cet engrènement des embases entre elles, chaque embase 9 comporte au moins à une extrémité située, dans le sens de défilement de la chaîne, un chanfrein 12 assurant l'introduction de ladite embase 9 au sein de l'une des surfaces d'appui 10 et/ou d'alignement 11 d'une autre embase contiguë. Ce chanfrein 12 consiste en un pan incliné reliant le chant avec la surface d'alignement 11.

Ainsi, les embases ne peuvent pas s'entrechoquer et l'inclinaison dudit chanfrein 12, assure le glissement et le guidage de ces pièces en vue de leur parfaite coopération en alignement. Cette insertion s'effectue au niveau de chacune des roues de renvoi inférieure 4 et supérieure 5, cette dernière étant représentée sur la figure 3 au moment de cette étape d'emboîtement ou d'assemblage.

La figure 5 reprend en coupe verticale transversale ce premier mode préférentiel de réalisation, au niveau des extrémités de deux embases 9 adjacentes, empilées en position d'appui, montrant les surfaces d'appui 10 et les surfaces d'alignement 11, en coopération les unes avec les autres. On constate bien que les surfaces 10 des embases 9 viennent en appui les unes avec les autres, tandis que les surfaces d'alignement 11 viennent coopérer à plat toutes les deux l'une contre l'autre.

Selon encore une autre caractéristique supplémentaire, l'invention prévoit d'améliorer l'aspect rigidifié de la chaine 2 aux niveaux de ses brins verticaux 6,7. Plus précisément, il est prévu d'empêcher la rotation au moins dans un sens des maillons 3 les uns par rapport aux autres au niveau de ces portions verticales de la chaîne 2, tout en autorisant leur pivotement au niveau des roues de renvoi 4,5.

Pour ce faire, partant de la position d'alignement de deux maillons 3, ledit dispositif 1 comprend des moyens de blocage du pivotement desdits deux maillons 3 contigus, dans la direction opposée au sens d'enroulement de ladite chaîne 2. En somme, dans le mode de réalisation représenté avec un sens d'avancement horaire, lesdits moyens de blocage empêchent chaque maillon 3 de pivoter sur l'axe 30 commun par rapport à un de ses maillons adjacent dans ce même sens horaire, mais autorise la rotation antihoraire. Ainsi, il n'est pas possible d'appuyer sur la chaîne 2 depuis l'extérieure vers l'intérieur du dispositif 1, cette portion de chaîne 2 étant bloquée. Toutefois, il est possible de la pousser depuis l'intérieur vers l'extérieur.

Différents modes de réalisation des moyens de blocage peuvent être envisagés.

Tout d'abord, lesdits moyens de blocage comprennent au moins une butée 13 solidaire de chaque maillon 3 contre laquelle vient bloquer au moins une surface d'arrêt 14 dont est pourvue intérieurement une embase 3. Dans cette configuration, la butée 13 est rapportée au maillon 3 et l'embase 9 vient en appui contre ladite butée 13.

Selon les modes de réalisations représentés sur les figures, lesdits moyens de blocage comprennent une unique butée 13 solidaire de chaque maillon 3, sous forme d'un plot saillant latéralement, contre lequel vient bloquer les surfaces d'arrêt 14 dont sont pourvues intérieurement deux embases contiguës 9. En somme, c'est le maillon intermédiaire, qui ne supporte pas d'embase 9, qui reçoit ce plot dépassant sur le côté où sont fixées lesdites deux embases 9 de ses deux maillons adjacents. Ce plot vient recevoir en appui le chant antérieur ou arrière de ces deux embases 9, ledit chant arrière constituant alors la surface d'arrêt 14 de chaque embase 9.

Selon un autre mode de réalisation, représenté sur la figure 6, lesdits moyens de blocage sont constitués par une surface d'arrêt 14 dont est pourvue chaque extrémité d'une embase 9, ladite surface d'arrêt coopérant avec une autre surface d'arrêt 14 d'une autre embase contiguë 9.

Plus particulièrement, ces surfaces d'arrêts 14 peuvent être ménagées au niveau des autres surfaces d'appui 10 et d'alignement 11. Pour ce faire, lesdites surfaces d'arrêt 14 peuvent consister en un décroché, ménagé selon la largeur du corps de chaque embase 9, celui de l'embase supérieure ou précédente ménagé au niveau de l'extrémité inférieur vers l'arrière tandis que celui de l'embase inférieure ou suivante est ménagé vers l'arrière. Ce sont alors les faces verticales de chaque décroché qui, en appui l'une contre l'autre, assurent l'effet de blocage vers l'intérieur.

Selon une autre configuration envisagée, lesdits moyens de blocage sont constitués par un chant d'arrêt 15 dont est pourvue extérieurement chaque embase 9 sur une partie de sa hauteur. Ledit chant d'arrêt 15 vient en appui contre la face extérieure au moins du maillon solidaire de ladite embase 9.

Comme visible sur la figure 7, plusieurs chants d'arrêt 15 sont ménagés le long du chant extérieur ou avant d'une embase 9. Ces différents chants viennent alors en appui contre le maillon 3, ou bien contre le maillon adjacent, qui ne comporte pas d'embase 9.

Comme visible sur la figure 8, ce chant d'arrêt 15 est constitué par un décroché s'étendant orthogonalement par rapport au plan contenant le corps de l'embase 9. Il dépasse du côté du maillon 3 et vient alors en appui, au niveau de sa face intérieure, contre le chant des platines 31 et 33, de préférence uniquement celui de la platine 31 située du côté de l'embase 9.

En outre, ces chants d'arrêt 15 peuvent être situés au niveau de chaque axe 30, s'étendant verticalement en vis-à-vis et de part et d'autre de ces derniers.

Ainsi, le dispositif 1 de noria selon l'invention permet de rigidifier la chaîne 2 aux niveaux de ses brins verticaux 6,7, tout en autorisant l'enroulement supérieur et inférieur autour des roues de renvoi 4,5. L'appui en empilement, l'alignement et le blocage ainsi conférés, assurent que les bras 8 s'étendant parfaitement horizontalement, sans ployer, ni se décaler angulairement par rapport au plan contenant ladite chaîne 2, à savoir le plan passant par ses deux brins 6,7.

Cette chaîne 2 rigide permet de s'affranchir de nombreux moyens et éléments de guidage, de diminuer la tension appliquée à ladite chaîne 2 et d'alléger la motorisation. En outre, les réglages sont plus faciles à réaliser, pour un entretien moindre, notamment une lubrification moins importante.

## Revendications

1. Dispositif (1) de transport, de type noria, comportant au moins une chaîne (2) d'entraînement à maillons (3) venant s'enrouler au moins autour de deux roues de renvoi (4,5) pour décrire un circuit bouclé comportant au moins un premier brin (6) de chaîne ascendant et un second brin de chaîne descendant (7) verticaux, au moins un maillon (3) de ladite chaîne (2) recevant un bras support (8) s'étendant suivant une direction à la fois perpendiculaire à la chaîne (2) et aux axes (30) des maillons (3) de ladite chaîne (2), le bras support (8) étant rapporté latéralement sur un
maillon (3) au moyen d'au moins une embase (9), une embase (9) comportant au moins une surface d'appui (10) à chacune de ses extrémités dans le sens de défilement de ladite chaîne (2), au moins au travers d'une de ces surfaces d'appui (10) ladite embase (9) reposant sur une autre embase contiguë d'un autre bras
support rapporté sur un autre maillon de la chaîne, au niveau des brins ascendant (6) et descendant (7) de ladite chaîne (2), **caractérisé par le fait que** chaque embase (9) comporte encore à chacune de ses extrémités une surface d'alignement (11) de son bras (8) dans un plan selon ladite direction, chaque surface d'alignement (11) venant coopérer avec une autre surface d'alignement d'une embase suivante ou précédente, au moins au niveau des brins ascendant (6) et descendant (7), chaque surface d'alignement (11) s'étendant verticalement, ménagée au moins en partie dans l'épaisseur de ladite embase (9), la surface d'alignement (11) étant ménagée par un décroché réalisé dans l'épaisseur du corps de l'embase (9), au niveau de chacun de ses chants supérieur et inférieur.

2. Dispositif de transport (1) selon la revendication 1, **caractérisé par le fait que** chaque surface d'appui (10) s'étend horizontalement vers la direction opposée audit maillon (3), au moins sur une partie du chant de son extrémité.

3. Dispositif de transport (1) selon l'une quelconque des revendications précédentes, **caractérisé par le fait que** chaque embase (9) comporte au moins à une extrémité située dans le sens de défilement de la chaîne (2), un chanfrein (12) assurant l'introduction de ladite embase (9) au sein de l'une des surfaces d'appui et/ou d'alignement d'une autre embase contiguë.

4. Dispositif de transport (1) selon l'une quelconque des revendications précédentes, **caractérisé par le fait que**, partant de la position d'alignement de deux maillons, ledit dispositif (1) comprend des moyens de blocage du pivotement desdits deux maillons contigus, dans la direction opposée au sens d'enroulement de ladite chaîne (2).

5. Dispositif de transport (1) selon la revendication 4, **caractérisé par le fait que** lesdits moyens de blocage comprennent au moins une butée (13) solidaire de chaque maillon (3) contre laquelle vient bloquer au moins une surface d'arrêt (14) dont est pourvue intérieurement une embase (9).

6. Dispositif de transport (1) selon la revendication 5, **caractérisé par le fait que** lesdits moyens de blocage comprennent une unique butée (13) solidaire de chaque maillon (3), sous forme d'un plot saillant latéralement, contre lequel vient bloquer les surfaces d'arrêt (14) dont sont pourvues intérieurement deux embases contiguës.

7. Dispositif de transport (1) selon la revendication 4, **caractérisé par le fait que** lesdits moyens de blocage sont constitués par une surface d'arrêt (14) dont est pourvue chaque extrémité d'une embase (9), ladite surface d'arrêt (14) coopérant avec une autre surface d'arrêt d'une autre embase contiguë.

8. Dispositif de transport (1) selon la revendication 4, **caractérisé par le fait que** lesdits moyens de blocage sont constitués par un chant d'arrêt (15) dont est pourvu extérieurement chaque embase (9) sur une partie de sa hauteur, ledit chant d'arrêt (15) venant en appui contre la face extérieure du maillon (3) solidaire de ladite embase (9).

## Patentansprüche

1. Transportvorrichtung (1) vom Noria-Typ, umfassend mindestens eine Antriebskette (2) mit Gliedern (3), die sich mindestens um zwei Getrieberäder (4,5) wickelt, um einen geschlossenen Kreis zu beschreiben, aufweisend mindestens einen ersten vertikalen aufsteigenden Kettenstrang (6) und einen zweiten vertikalen absteigenden Kettenstrang (7), wobei mindestens ein Glied (3) der Kette (2) einen Stützarm (8) empfängt, der sich gemäß einer Richtung sowohl senkrecht zur Kette (2) als auch zu den Achsen (30) der Glieder (3) der Kette (2) erstreckt, **dadurch gekennzeichnet, dass** ein Stützarm (8) seitlich auf einem Glied (3) mit Hilfe von mindestens einer Leiste (9) angebracht ist, wobei eine Leiste (9) mindestens eine Stützfläche (10) an jedem ihrer Enden in Richtung des Vorbeilaufs der Kette (2) aufweist, wobei die Leiste (9) mindestens mittels einer dieser Stützflächen (10) auf einer anderen Leiste ruht, die an einem anderen Stützarm anliegt, der auf einem anderen Glied der Kette angebracht ist, im Bereich des aufsteigenden (6) und absteigenden (7) Strangs der Kette (2), und dadurch, dass jede Leiste (9) ebenfalls an jedem ihrer Enden eine Fluchtfläche (11) ihres Arms (8) in einer Ebene gemäß der Richtung aufweist, wobei jede Fluchtfläche (11) mit einer anderen Fluchtfläche einer folgenden oder vorangehenden Leiste zusammenwirkt, mindestens im Bereich des aufsteigenden (6) und absteigenden (7) Strangs, wobei sich jede Fluchtfläche (11) vertikal erstreckt, ausgebildet mindestens teilweise in der Stärke der Leiste (9), wobei die Fluchtfläche (11) von einer Erweiterung ausgebildet ist, die in die Stärke des Körpers der Leiste (9) im Bereich jeder ihrer oberen und unteren Kanten ausgebildet ist.

2. Transportvorrichtung (1) nach Anspruch 1, **dadurch gekennzeichnet, dass** sich jede Stützfläche (10) horizontal in der zum Glied (3) entgegengesetzten Richtung mindestens über einen Teil der Kante ihres Endes erstreckt.

3. Transportvorrichtung (1) nach einem der vorangehenden Ansprüche, **dadurch gekennzeichnet, dass** jede Leiste (9) mindestens an einem Ende, das sich in Richtung des Vorbeilaufs der Kette (2) befindet, eine Schräge (12) aufweist, die das Einführen der Leiste (9) in eine der Stütz- und/oder Fluchtflächen einer anderen angrenzenden Leiste sichert.

4. Transportvorrichtung (1) nach einem der vorangehenden Ansprüche, **dadurch gekennzeichnet, dass**, ausgehend von der Fluchtposition von zwei Gliedern, die Vorrichtung (1) Blockiermittel des Schwenkens der zwei anliegenden Glieder in eine Richtung entgegengesetzt zur Wickelrichtung der Kette (2) umfasst.

5. Transportvorrichtung (1) nach Anspruch 4, **dadurch gekennzeichnet, dass** die Blockiermittel mindestens einen Anschlag (13) umfassen, der mit jedem Glied (3) fest verbunden ist, an dem mindestens eine Stoppfläche (14) blockiert, mit der eine Leiste (9) innen ausgestattet ist.

6. Transportvorrichtung (1) nach Anspruch 5, **dadurch gekennzeichnet, dass** die Blockiermittel einen einzigen Anschlag (13) umfassen, der mit jedem Glied (3) fest verbunden ist, in Form eines seitlich hervorstehenden Zapfens, an dem die Stoppflächen (14) blockieren, mit denen zwei anliegende Leisten innen ausgestattet sind.

7. Transportvorrichtung (1) nach Anspruch 4, **dadurch gekennzeichnet, dass** die Blockiermittel von einer Stoppfläche (14) gebildet sind, mit der jedes Ende einer Leiste (9) ausgestattet ist, wobei die Stoppfläche (14) mit einer anderen Stoppfläche einer anderen anliegenden Leiste zusammenwirkt.

8. Transportvorrichtung (1) nach Anspruch 4, **dadurch gekennzeichnet, dass** die Blockiermittel von einer Stoppkante (15) gebildet sind, mit der außen jede Leiste (9) über einen Teil ihrer Höhe ausgestattet ist, wobei sich die Stoppkante (15) auf der Außenseite des Glieds (3) abstützt, das mit der Leiste (9) fest verbunden ist.

## Claims

1. A transport device (1), of the noria type, including at least one drive chain (2) having links (3) that is wound at least around two deflection wheels (4, 5) so as to describe a loop circuit comprising at least a first, ascending vertical chain strand (6) and a second, descending vertical chain strand (7), at least one link (3) of said chain (2) holding a support arm (8) extending in a direction both perpendicular to the chain (2) and to the axes (30) of the links (3) of said chain (2), a support arm (8) being attached laterally on a link (3) by means of at least one mount (9), a mount (9) including at least one support surface (10) at each of its ends in the travel direction of said chain (2), at least across one of these support surfaces (10), said mount (9) resting on another, contiguous mount of another support arm attached to another link of the chain, on the ascending (6) and descending (7) strands of said chain (2), **characterized in that** each mount (9) also includes, at each of its ends, an alignment surface (11) for its arm (8) in a plane along said direction, each alignment surface (11) cooperating with another alignment surface of a following or preceding mount, at least at the ascending (6) and descending (7) strands, each alignment surface (11) extending vertically, arranged at least partially in the thickness of said mount (9), the alignment surface (11) being arranged by an indentation made in the thickness of the body of the mount (9), at each of its upper and lower rims.

2. The transport device (1) according to claim 1, **characterized in that** each support surface (10) extends horizontally toward the direction opposite said link (3), at least over part of the rim of its end.

3. The transport device (1) according to any one of the preceding claims, **characterized in that** each mount (9) includes, at least at one end situated in the travel direction of the chain (2), a bevel (12) ensuring the introduction of said mount (9) within one of the support and/or alignment surfaces of another contiguous mount.

4. The transport device (1) according to any one of the preceding claims, **characterized in that**, starting from the alignment position of two links, said device (1) comprises means for blocking the pivoting of said two contiguous links, in the direction opposite the winding direction of said chain (2).

5. The transport device (1) according to claim 4, **characterized in that** said blocking means comprise at least one stop (13) secured to each link (3) against which at least one stop surface (14) provided inside a mount (9) becomes blocked.

6. The transport device (1) according to claim 5, **characterized in that** said blocking means comprise a single stop (13) secured to each link (3), in the form of a pin protruding laterally, against which the stop surfaces (14) provided inside two contiguous mounts are blocked.

7. The transport device (1) according to claim 4, **characterized in that** said blocking means are made up of a stop surface (14) provided at each end of a mount (9), said stop surface (14) cooperating with another stop surface of another contiguous mount.

8. The transport device (1) according to claim 4, **characterized in that** said blocking means can be made up of a stop rim (15) with which each mount (9) is outwardly provided over part of its height, said stop rim (15) bearing against the outer face of the link (3) secured to said mount (9).
